# EUROPEAN PATENT SPECIFICATION

(11) **EP 3 212 861 B1**
(45) Date of publication and mention of the grant of the patent: **12.12.2018**
(21) Application number: 15791739.4
(22) Date of filing: 25.09.2015
(51) Int. Cl.: E04H 9/02, E04B 1/98, F16B 15/00, E04B 1/26

(54) **DISSIPATIVE CONNECTION WITH OPTIMIZED STIFFNESS AND STRENGTH FOR JOINING CONSTRUCTION ELEMENTS**
DISSIPATIVE VERBINDUNG MIT OPTIMIERTER STEIFIGKEIT UND STÄRKE ZUM VERBINDEN VON BAUELEMENTEN
RACCORDEMENT DE DISSIPATION PRÉSENTANT UNE RIGIDITÉ ET UNE RÉSISTANCE OPTIMISÉES PERMETTANT D'ASSEMBLER DES ÉLÉMENTS DE CONSTRUCTION

(30) Priority: 26.09.2014 IT MI20141690
(43) Date of publication of application: 06.09.2017
(73) Proprietor: Universita' Degli Studi Di Padova, 35122 Padova (IT); Enzo, Bozza, 35010 Borgoricco (PD) (IT); Dario, Francescato, 35135 Padova (IT)
(72) Inventor: ENZO, Bozza, I-35010 Borgoricco (PD) (IT); DARIO, Francescato, I-35135 Padova (IT); MARIA ROSA, Valluzzi, I-35030 Rubano (PD) (IT); ENRICO, Garbin, I-35042 Este (PD) (IT); STEFANO, Parente, I-36100 Vicenza (IT)
(74) Representative: Lisa, Elisabetta
(86) International application number: PCT/IB2015/057383
(87) International publication number: WO 2016/046796

(56) References cited:
- JP-A- H01 190 880
- JP-A- 2006 045 975
- JP-U- H0 715 962

## Description

### TECHNICAL FIELD

The present invention relates to the field of connections between construction elements.

More precisely, the present invention relates to a connecting device between construction elements for the controlled dissipation of energy.

Moreover the invention relates also to a method for the controlled dissipation of energy between construction elements by means of one or more connecting devices.

The invention has a preferred and advantageous application in the construction of earthquake-resistant buildings.

### PRIOR ART

In the building field several connection techniques are known, which are directed to join two or more structural elements with different stiffness and strength levels.

Modern constructions are more and more subjected to eco-efficiency and sustainability requirements as pointed out in the recent research lines promoted by the European Economic Community (Pacheco Torgal & Jalali 2011, 2014 [1] e [2]); among the several construction techniques able to meet the eco-sustainability requirements there are the wooden residential constructions made with a load-bearing structure of cross-laminated prefabricated panels (XLam) and covered with high energy efficiency natural and/or conventional materials (Kotsopoulos et al. 2012 [3], De Luca 2013 [4], Pasetto et al. 2013 [5]).

The use of such construction type in areas with a high seismic risk requires the evaluation of their strength and energy dissipation capacities in case of earthquakes (Ceccotti et al. 2008 [6], Piazza et al. 2005 [7], Fragiacomo et al. 2011 [8]).

Previous experimental experiences have pointed out the promising performances of constructions made of cross-laminated prefabricated panels (Hristovski et al. 2012 [9], Ceccotti et al. 2013 [10], Pozza 2013 [11]), where connectors play an important role in energy dissipation during earthquakes; accordingly, the need of developing ad-hoc connections has been highlighted, especially for the anchoring in foundation and the connection between structural elements, that can guarantee at least the same strength as the conventional ones (Piazza et al. 2005 [7]), but improving the dissipative capacity of the structure (Fragiacomo et al. 2011 [8], Pozza 2013 [11], Rinaldin et al. 2013 [12], Tomasi et al. 2013 [13]).

Moreover, current experimental experiences (Ceccotti et al. 2013 [10], Pozza 2013 [11], Tomasi et al. 2013 [13]) have pointed out how the current conventional connections - of the "hold-down" type, that is a tensile acting plate that prevent overturning in the plane and "angle bracket" type, that is a shear acting plate that withstands the sliding - always produce an irreversible damage on cross-laminated prefabricated panels, which are unlikely to be replaced (Piazza et al. 2005 [7], Gavric et al. 2012 [14]).

Therefore there is the need of producing a connection for cross-laminated prefabricated panels, potentially applicable also to other prefabricated or existing structures, which is able to:
- replace conventional connections, providing a stiffness and strength comparable with, but preferably higher than, those of said types;
- provide a designable failure mode depending on the stresses to be withstood and characterized by higher energy dissipation;
- avoid damaging the connected elements by a so called "fuse" behavior during a seismic event; and
- be replaced in case of failure.

In order to meet the above four requirements, knowledge about geometry and strength of conventional "hold-down" and "angle bracket" connections have been combined (Piazza et al. 2005 [7], Fragiacomo et al. 2011 [8], Ceccotti et al. 2013 [10], Pozza 2013 [11], Tomasi et al. 2013 [13]) with those coming from "damper" systems, that is passive dissipative systems developed in the field of metallic constructions for generating dissipative connections with "fuse" behavior that can be designed a priori; in this field the solutions provided by Latour et al. (2011) [15], Latour et al. (2012) [16], Yuen et al. (2012) [17], are known, which point out the interesting potentialities for such connections.

Among the several existing "damper" systems for metallic constructions (Benavent-Climent 2010 [18]), the most interesting one for generating connections of prefabricated elements for residential constructions are the "slit dampers", that is slit dissipation devices (Chan et al. 2008 [19], Oh et al. 2009 [20]), the "buckling restrained brace", that is buckling-preventing braces (Benavent-Climent 2010 [18], Black et al. 2004 [21]) and the "friction dampers", that is friction dissipation devices (Yuen 2012 [17], Butterworth 2000 [22], Mirtaheri et al. 2011 [23]).

"Slit damper" systems provide to create an elasto-plastic dissipative element by using plates made of ductile metal materials that are specifically milled and shaped in order to obtain a series of mini-rods; said mini-rods are subjected in their plane to a bending behavior comparable to that of a built-in beam, which is stressed beyond the elastic limit and till the stable formation of plastic moments at the ends.

The "buckling restrained brace" systems are based on the idea of generating brace systems able to exceed the elastic limit both under tensile and compression stresses, when the resistant element is axially stressed, and able to remain in the plastic field of the deformations in a stable manner such to guarantee an optimal energy dissipation; this can be obtained with braces with reduced dimensions, that, in order to overcome the phenomenon of the elastic instability during the compression phase, are enclosed by an outer casing that increases their inertia and make them stable also under axial compression loads.

The "friction damper" systems are based on using the dissipation generated by friction occurring between metallic elements when they are compulsorily kept in contact by a pre-compression force.

The Japanese patents JPH01-190880, JPH07-017962 and JP200645975 describe damping elements (or dampers). The dampers described herein have a plate having one or more row/columns of holes defining dissipative elements. JP200645975 provides a damper made of plastic material, soft enough for being used in wooden structures.

All the systems listed above, mainly applied in the field of metallic constructions, have a high degree of energy dissipation that can be designed a priori and depending on specific needs of a structure; moreover they are characterized by the possibility of concentrating the damage (plasticization) and the subsequent failure of the "damper" in regions of the connector known a priori (Benavent-Climent 2010 [18], Chan et al. 2008 [19], Mirtaheri et al. 2011 [23]).

Such systems however are difficult to be applied to constructions of cross-laminated prefabricated panels (XLam) in the seismic field, where the stresses to be withstood, with axial and bending components, generally tend to eradicate the connection means of the connections to the structural elements.

More precisely, the anchoring in the foundation of some prefabricated panels made by means of metal plates of the "hold-down" and "angle bracket" type connected to the panels and fastened to the foundation by means of connectors, exhibits a failure mechanism characterized by the embedment of the connection to the panel (Fragiacomo et al. 2011 [8], Tomasi et al. 2013 [13]); the dissipation offered by such failure mechanism is necessarily influenced by the allowances existing in the connection to the panel and to the foundation, usually exhibits the damage of the connected elements and leads to the need of replacing the connection and of repairing/replacing the prefabricated panel to recover strength and stiffness of the connection, and consequently of the building, after the seismic event (the area of the panel involved by the connection usually is damaged such to prevent the connection from being replaced unless the panel is replaced or the position of the connection is displaced).

Other technical solutions to make the connection between construction elements are described, for example, in the Chinese patent application n. CN 103174235 A, which is about a dissipative connection by a metallic plate as a quarter of circumference in the beam-column node made of concrete, and in the Chinese Utility Model Patent n. CN 201103173Y, which is about a three-dimensional metallic device for dissipation of steel braces.

An application in the anti-seismic building field is the one shown in the European Patent application n. EP 2 557 244 A1; such document teaches to carry out a wood-concrete connection by a metallic angle bracket bent substantially with a "Z" shape, embedded in the casting and secured by metallic points to the wooden element that, however, is not able to withstand axial and bending forces contemporaneously applied.

Finally a solution for dissipative connections of bolted joints between metallic beam and column is known, described in the US patent applications n. US 2005/0257451 A1 and n. US 2008/0148681 A1; such solution shows the concentration of plasticization in a specific element of the axial behavior connection.

However, said solution in the dissipative area does not provide several dissipative elements, some with an axial behavior and other ones with a bending behavior, that are activated at different levels of the applied load, this limiting the properties of ductility, strength and stiffness; moreover such solution is usable only in skeleton constructions and not also for the connection between flat elements or between linear and flat elements, both in new buildings and in existing buildings.

Therefore, in the current technological panorama, there is the need of defining a new connection that can be used for connecting load-bearing structures made of XLam that, since provided with better mechanical strength characteristics, offer the possibility of making eco-sustainable buildings made of wood also with several storeys, and therefore potentially subjected to axial and bending stresses.

More in general, there is the need of defining a new connection able to made efficacious dissipative connections between elements subjected to cyclic actions in the plane of the connection and, therefore, that can be used in several cases in the building field, both new design ones (prefabricated panel structures, infill walls of skeleton constructions) and already existing ones (stiffening and recovery).

### OBJECTS AND SUMMARY OF THE INVENTION

It is the object of the present invention to overcome the drawbacks of the prior art related to the construction of wooden buildings, possibly multi-storey ones, intended for seismic areas.

A more general object of the present invention is to overcome drawbacks of the prior art related to the realization of new design constructions and the renovation of existing constructions that are resistant to seismic events.

In particular, it is the object of the present invention to provide a device for the connection between construction elements having a geometry optimized for the controlled dissipation of energy in the seismic field.

Then it is the object of the present invention to provide a dissipative connecting device that replaces conventional connections, providing strength and stiffness that are comparable with, but preferably higher than, those of such types.

It is a further object of the present invention to provide a dissipative connecting device having a designable failure mode depending on the stresses to be withstood and characterized by greater energy dissipation.

It is a further object of the present invention to provide a dissipative connecting device that prevents the connected elements from being damaged by a "fuse" behavior during a seismic event.

A further object of the present invention is to provide a dissipative connecting device easy to be installed, and that, in addition, can be removed and replaced in case of failure.

It is a further object of the present invention to provide a dissipative connecting device simple to be manufactured, such that it can be series-produced and with limited costs.

It is a further object of the present invention to provide a building made with cross-laminated prefabricated panels XLam joined by a plurality of dissipative connecting devices able to dissipate energy in a controlled way and, consequently, resulting resistant to seismic actions.

It is a further object of the present invention to provide a method for dissipating energy in a controlled way between cross-laminated prefabricated panels XLam joined with each other and/or with the foundation through a plurality of dissipative connecting devices.

It is a further and more general object of the present invention to provide a method for dissipating energy in a controlled way by an arrangement of horizontal and vertical dissipative elements having, respectively, a bending and axial behavior, whose combination allows a connecting device to be designed with any shape and of any material, that results elasto-plastic ductile under tensile and compression conditions.

These and other objects of the present invention are achieved by a dissipative connecting device, a building comprising at least one of said dissipative connecting device and a method for dissipating energy in a controlled way through at least one of said dissipative connecting devices, embodying the characteristics of the annexed claims, which are an integral part of the present invention.

It is a subject matter of the present invention, possibly independent and usable autonomously from the other aspects of the invention, a device for the connection between construction elements for the controlled dissipation of energy, specifically in the seismic field, this being possible, advantageously, by the provision of plates that are shaped in a suitable and different manner that allow the yielding (plasticization) to be conveyed and concentrated in some specific parts of the device, such to guarantee the mechanical performances required in cyclic field, preventing the connected part from being damaged.

In a first embodiment, the dissipative connecting device is a plate comprising a first portion, with a substantially rectangular shape: this solution, with a compact shape, provides the advantage of allowing a very simple modular production, minimizing the cutting phases and the scraps and also accelerating the production process.

In a second particularly advantageous embodiment, the dissipative connecting device is a plate comprising a first and a second portion, both with a substantially rectangular shape but with different sections, particularly the second portion having a section reduced with respect to the first portion such that the device has a substantially T-shaped configuration: this solution, with a shaped configuration, offers the advantage of minimizing the amount of used material.

In a first variant of said second embodiment, the dissipative connecting device is arranged for being connected to the elements to be joined by bars and nails.

In a second variant of said second embodiment the dissipative connecting device is arranged for being connected to the elements to be joined only by bars.

It is possible to suitably provide further variants, provided that the connection systems between the connected parts exhibit overstrength with respect to the dissipative elements of the plate.

It is a subject matter of the present invention, possibly independent and usable autonomously from the other aspects of the invention, a building comprising a plurality of said connecting devices between construction elements for the controlled energy dissipation, and therefore resistant to seismic actions.

It is a further subject matter of the present invention, possibly independent and usable autonomously with respect to the other aspects of the invention, a method for controlled dissipation of energy between construction elements, this being possible, advantageously, by defining axial and bending forces to be absorbed and by subsequently dimensioning the dissipative elements depending on said axial and bending forces to be absorbed.

Thus, all the drawbacks mentioned above are eliminated.

Particularly, advantageously, the technical solution according to the present invention makes it possible to:
- make new constructions also made of XLam and possibly multi-storey ones, and to renovate existing constructions resistant to seismic events,
- guarantee stiffness and strength comparable or higher than those of the known types of connections,
- design dissipative connections depending on the stresses to be withstood, and possibly on the material to be used,
- guarantee energy dissipation greater than that of the known types of connections,
- prevent connected elements from being damaged by a "fuse" behavior during a seismic event,
- make an easy installation and also the possibility of removing and replacing in case of failure, as well as a simple and inexpensive manufacturing.

Moreover, the idea of providing the dissipative connecting device according to the present invention designable depending on the stresses to be withstood and, possibly, on the material to be used allows dissipative connections to be made adaptable to the several operating needs, namely to the several situations that potentially can occur in a seismic area.

Further advantageous characteristics will be more clear from the following description of preferred but not exclusive embodiments, provided by way of example and not as a limitation.

### BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Fig.1 is a front view of a dissipative connecting device according to the a first embodiment of the present invention;
Fig. 2 is a front view of a dissipative connecting device according to a second embodiment of the present invention;
Fig.3 is a perspective view of a first variant of the dissipative connecting device shown in Fig.2;
Fig.4 is a front view of a second variant of the dissipative connecting device shown in Fig.2;
Fig.5A is a perspective view of two construction elements ready to be joined by the dissipative connecting device shown in Fig.4;
Fig.5B is a perspective view of two construction elements joined by the dissipative connecting device shown in Fig.4;
Fig. 6 is the operation diagram of the dissipative connecting device according to the present invention;
Fig.7 is a graph showing the behavior of a dissipative connecting device according to the present invention subjected to an experimental monotonic tensile test;
Fig.8A is a front view of a specimen of the dissipative connecting device shown in Fig.2 arranged for being subjected to a tensile test;
Fig.8B is a front view of the specimen shown in Fig.8A after having been subjected to the tensile test; and
Fig.9 is a flow diagram of the method according to the present invention.

### DETAILED DESCRIPTION OF THE INVENTION

While the invention is susceptible of various modifications and alternative forms, some preferred embodiments are shown in the drawings and will be described below in detail.

It should be understood, however, that there is no intention to limit the invention to the specific embodiment disclosed, but, on the contrary, the intention of the invention is to cover all modifications, alternative constructions and equivalents falling within the scope of the invention as defined in the claims.

Therefore in the following description the use of "for example", "etc", "or" indicates non-exclusive alternatives without limitation unless otherwise defined; the use of "also" means "among which, but not limited to" unless otherwise defined; the use of "including/comprising" means "including/comprising but not limited to," unless otherwise defined.

In the present description
- "ductility" of a material or a section or a structural element or a structure means the ability to exhibit deformations or rotations or displacements, or interstorey displacements, once the elastic limit is exceeded, keeping a strength higher than or equal to that of the elastic phase;
- "embedment" means the plastic deformation of a hole inside which the connector is housed;
- "plasticization" means the post-elastic permanent deformation phase of a material; and
- "dissipation" means the ability of a structure or of a structural element to convert the input energy given by the seismic event by transforming it, for example, into a plastic deformation.

Briefly, the inventive principle at the base of the connecting element for construction components in a seismic area according to the present invention, deriving from the experimental research and from numerical modelling made by the Applicant and proved by laboratory tests, is the shape designed and optimized for the controlled dissipation of energy, that is able to concentrate the damage in some specific suitably designed elements, protecting the integrity of the connected elements; in particular the dissipative connecting device of the present invention allows load-bearing structures of a building to be connected (e.g. the connection between a wall and the foundation) and it is composed of a shaped and perforated plate with such a geometry to create a sequence of elements wherein plasticization takes place gradually and according to a known sequence, guaranteeing the necessary amount of strength and stiffness.

As a consequence of the device being axially involved, the dissipative elements have a pseudo-rectangular shape with rounded angles to limit the concentration of stresses and are arranged in such a manner to give a distinct axial contribution (vertical elements) or bending contribution (horizontal elements), such to withstand the displacements in the plane of the connected elements.

In the phase when the connector is stressed, the dissipative elements provide on the whole a lower strength to the adjacent regions directly connected to the disconnected parts, therefore the yielding progressively occurs in the axial elements and, then, in the bending ones, while the remaining of the connection remains within the elastic range.

The preferred application of the dissipative connecting device according to the present invention is the connection of prefabricated panels of XLam to the foundation structure; however the dissipative connecting device according to the present invention is suitable for many other applications in the building field, particularly as regards stiffening and improvement of mechanical performances in a seismic area, that is to promote the mutual cooperation between disconnected parts.

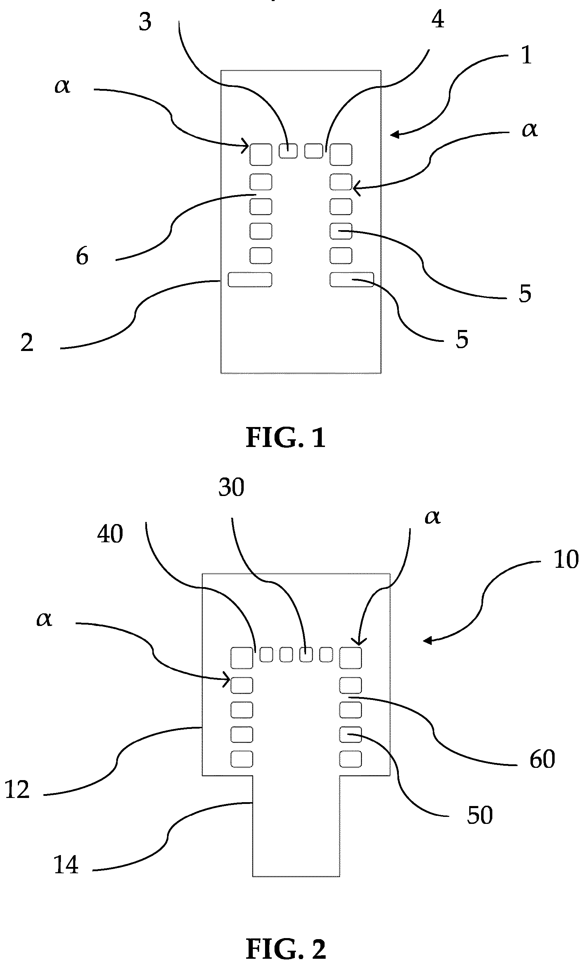

With reference to Fig.1 a dissipative connecting device 1 according to a first embodiment of the present invention is shown.

Said dissipative connecting device 1 is a plate comprising a first portion 2 with a substantially rectangular shape; as said above, the choice of such compact shape advantageously allows a simple and quick production, where the cutting steps and the scraps are minimized.

Said plate can be made of any type of material with an elasto-plastic ductile behavior under tensile and compression conditions, such as metals (for example S355 steel), alloys, polymer materials, and the like; it is clear that any material having said elasto-plastic ductile behavior under tensile and compression conditions may be suitably used depending on the structural elements to be connected and on the stresses to be withstood.

Said first portion 2 comprises a plurality of first holes 3 and a plurality of second holes 5.

Said first holes 3 are dimensioned and spaced apart from each other such to create a plurality of first dissipative elements 4 directed in the main development direction of the plate and intended to absorb axial forces applied on said connecting device 1. Therefore the first dissipative elements are composed of plate portions interposed between two first subsequent holes 3.

Said second holes 5 are dimensioned and spaced apart from each other such to create a plurality of second dissipative elements 6 directed perpendicularly to the main development direction of the plate and intended to absorb bending stresses deriving from the axial forces applied on said connecting device 1. The second dissipative elements 6 therefore are composed of plate portions interposed between two second subsequent holes 5.

Said first holes 3 and said second holes 5 have a substantially rectangular shape with rounded angles α for limiting the concentration of forces; more precisely, two consecutive sides of said first holes 3 and said second holes 5 are suitably joined to meet the specific performance requirements and, preferably, the radius of curvature may vary within the range 0.5-200 mm.

Said first holes 3 have dimensions ranging from 1 mm² to 160,000 mm² and are mutually spaced by 1 -1,000 mm.

Said second holes 5 have dimensions ranging from 1 mm² to 160,000 mm² and are mutually spaced by 1 - 1,000 mm.

As it can be well seen in figure 1, the first and second holes (3, 5) are arranged such that the second dissipative elements 6 are arranged in sequence along the long sides of a U-shaped, internally solid, curve and wherein the first dissipative elements are arranged along the short side of the U-shaped curve. In substance, the first holes 3 are aligned on a row in the direction transversal to the development direction of the plate, while the second holes 5 are aligned on two columns arranged in the development direction of the plate.

Such as shown in figure 1, not all the holes have the same dimension, particularly the holes placed at the end of the short side of the U (that act both as first holes and as second holes to define first and second dissipative elements) are wide as much as the second holes, while they are longer than the first holes, this allows such corner holes to contribute in defining the first and second dissipative elements that are separated and have no point in common with each other. Generally, the arrangement and shape of the first and second holes is such that the first dissipative elements 6 are separated from and have no point in common with the second dissipative elements 4. It is clear that the size of the dissipative connecting device according to the invention depends on the design requirements, on the material selected for the plate and on the characteristics of the construction elements to be joined; therefore the dimensions and the distances mentioned above may change according to design and operating reasonableness criteria.

With reference to Figure 2, it shows a dissipative connection element 10 according to a second embodiment of the present invention.

Said dissipative connection element 10 is a plate comprising a first portion 12 and a second portion 14; as said above, the choice of such shaped configuration allows the amount of used material to be minimized.

Said first portion 12 and said second portion 14 both have a substantially rectangular shape and said second portion 14 has a section reduced than said first portion 12, such that said connecting device 10 has a substantially "T"-shaped configuration.

Likewise the first embodiment described above, the plate forming said dissipative connecting device 10 may be made of any material with an elasto-plastic ductile behavior under tensile and compression conditions.

Likewise the first embodiment described above, said first portion 12 comprises a plurality of first holes 30 dimensioned and spaced apart from each other such to create a plurality of first dissipative elements 40 directed in the main development direction of the plate and intended to absorb axial forces applied on said connecting device 10, and a plurality of second holes 50 dimensioned and spaced apart from each other such to create a plurality of second dissipative elements 60 directed perpendicularly to the main development direction of the plate and intended to absorb bending forces applied on said connecting device 10; said first holes 30 and second holes 50 have a substantially rectangular shape with rounded angles α to limit the concentration of stresses.

The dimensions of said first holes 30 and second holes 50 as well as their relative distances fall within the ranges of values provided for the first embodiment described above.

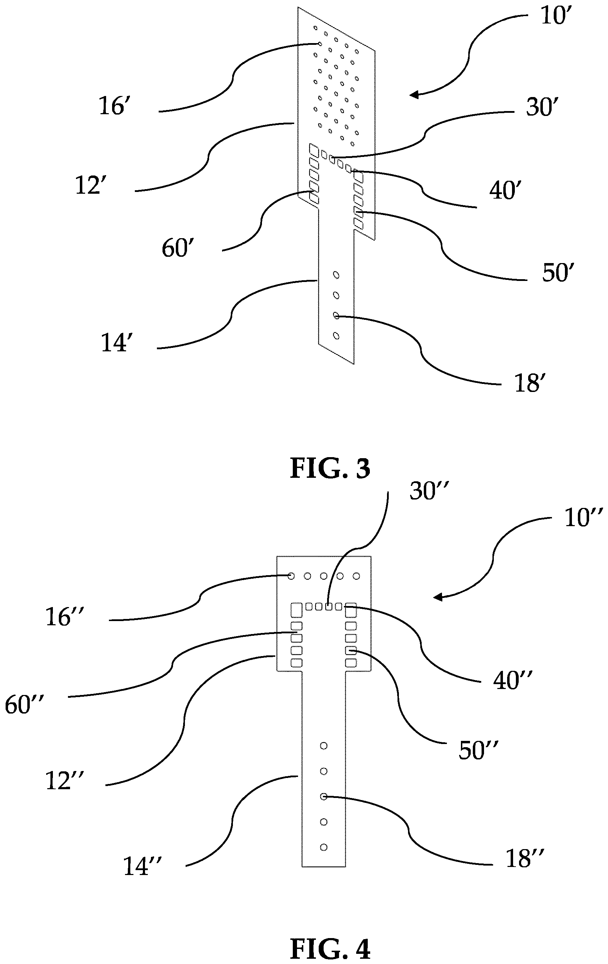

With reference to Figs.3 and 4, they show a dissipative connecting device 10' and a dissipative connecting device 10" wherein, respectively, a first portion 12' and 12" comprises a plurality of first holes 30' and 30" and corresponding first dissipative elements 40' and 40" and a plurality of second holes 50' and 50", and corresponding second dissipative elements 60' and 60", said first holes 30' and 30" and said second holes 50 and 50" having characteristics similar to those of the embodiments described above.

Said first portion 12' and 12" further comprises a plurality of first apertures 16' and 16".

Said second portion 14' and 14" comprises a plurality of second apertures 18' and 18"; it has to be noted here that the second plate portion comprises only the second apertures, while the first and second holes are all comprised in the first plate portion.

Said first apertures 16' and 16" and said second apertures 18' and 18" are intended to receive means M for joining said connecting device 10' and 10" to construction elements, for example a wooden prefabricated panel L and a reinforced concrete foundation C.

According to the first variant of the second embodiment shown in fig.3, said dissipative connecting device 10' is arranged for being connected to the elements L, C to be joined, by means of bars to be inserted in the first apertures 16' and by means of nails to be inserted in the second apertures 18'.

According to the second variant of the second embodiment shown in fig.4 said dissipative connecting device 10" is arranged for being connected to the elements L, C to be joined, by means of nails to be inserted both in the first apertures 16" and in the second apertures 18".

The embodiments and variants described and shown herein are some non limitative embodiments of the dissipative connecting device according to the present invention, but, as it will be clear for the person skilled in the art, the shape of the plate and the arrangements for connecting the plate to the construction elements may be very different depending on the specific needs.

Particularly, as regards the substantially rectangular shape (Fig.1) or the substantially T-shaped one (Fig.2) it is specified that obviously it is possible to make other shapes, however complying with the inventive principle that provides the sequence of dissipative elements where plasticization develops gradually and according to a known sequence, while guaranteeing the necessary strength and stiffness contribution.

In particular as regards the connection made by means of bars and nail (Fig.3) or only by bars (Fig.4) it is specified that obviously it is possible to advantageously use other solutions however complying with the main condition according to which the systems for the connection between the connected parts exhibit overstrength with respect to first and/or second dissipative elements of the plate.

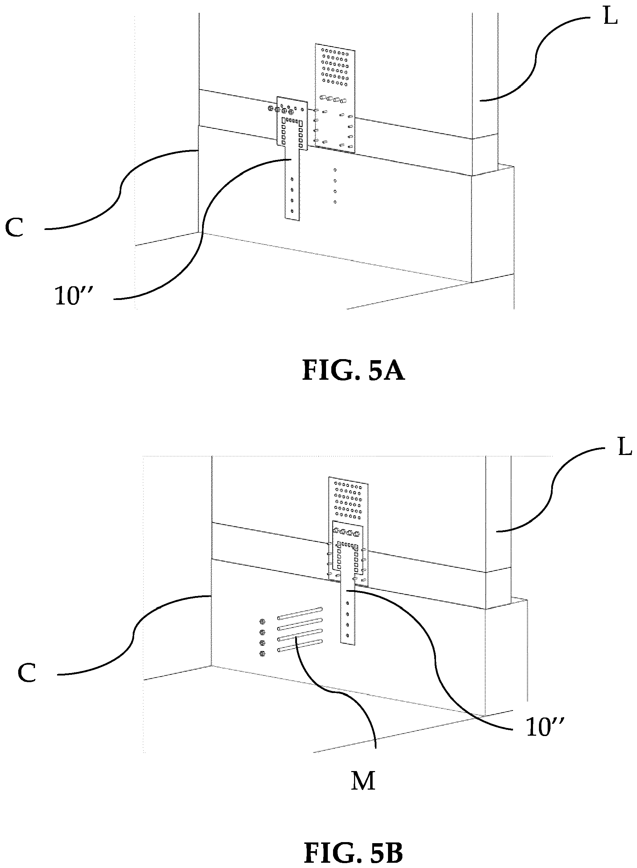

With reference to Figs. 5A and 5B, they show a possible application of the dissipative connecting device according to the invention, to connect two load- bearing structures of a building, that is a wooden prefabricated panel L and a reinforced concrete foundation C; in particular the configuration of the dissipative connecting device 10" described with reference to fig.4 is shown.

The dissipative connecting device 1, 10, 10', 10" according to the present invention is designed to convey the plasticization in the specifically designed dissipative elements 4, 40, 40', 40" and 6, 60, 60', 60", which overcome the elastic limit for predetermined stress forces and dissipate energy by means of the ductile capacity of the material of the device; the dissipative elements use the axial or bending behaviors in a coupled and/or uncoupled manner.

When a device 1, 10, 10', 10" according to the present invention connected to at least two construction elements L, C is subjected to axial forces it is possible to observe a first non-linear phase that involves the axial dissipative elements and after the plasticization in such elements, the yielding will stop by involving the bending dissipative elements.

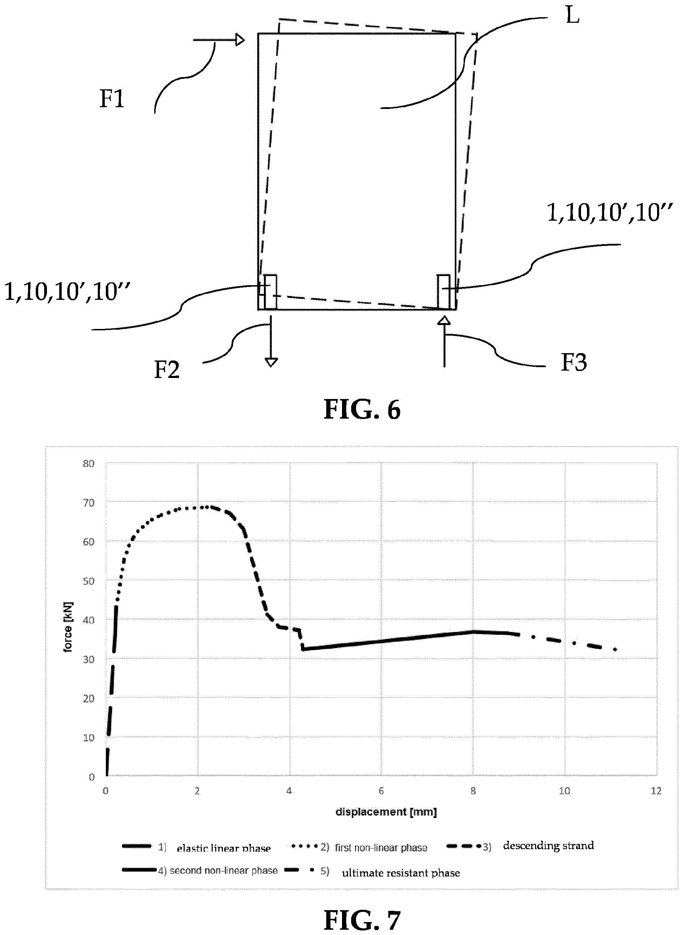

With reference to Fig.7, showing a force-displacement graph of the behavior of the connection subjected to a monotonic tensile experimental test, said phases following one another are observed and precisely:
phase 1): elastic linear phase, wherein the first and second dissipative elements remain within the elastic range of the material composing the connection plate;
phase 2): first non-linear phase, wherein the first dissipative elements fall within the plastic range of the material composing the connection plate;
phase 3): decreasing strand, phase wherein the first dissipative elements reach the failure;
phase 4): second non-linear phase, wherein only the second dissipative elements contribute to the resistance with deformations within the plastic range;
phase 5): ultimate resistant phase, wherein the second dissipative elements reach the failure.

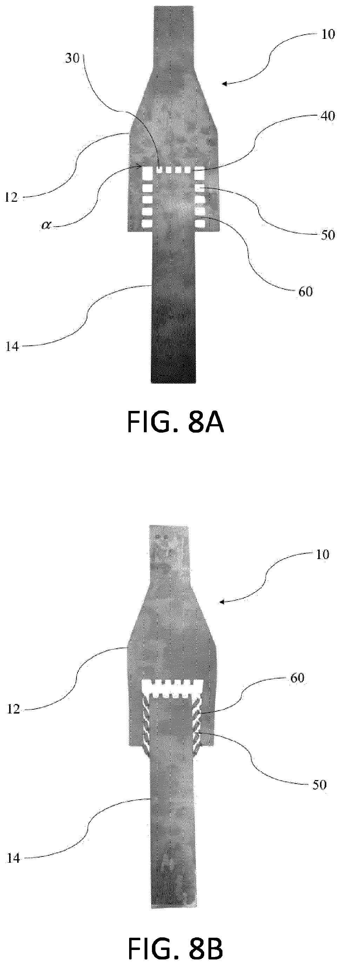

Therefore, the dissipative connection element 1, 10, 10', 10" according to the present invention localizes the damage and its possible subsequent failure in points specific and designed a priori, such as shown in Figs.8A and 8B, avoiding the damage/failure of the connected elements L, C that remain undamaged.

It is suitable herein to remember that what it is important for the present invention is the predetermined perforation of a plate, that can have any shape and that can be made of any material with an elasto-plastic ductile behavior under tensile and compression conditions, said predetermined perforation being designed and optimized for the controlled dissipation of energy, namely to concentrate the damage in some specific elements and to protect the integrity of the connected elements.

In the particular case of the connection between a wooden structural panel and the foundation, shown in the already mentioned Figs. 5A and 5B, said dissipative connecting device works in a tensile manner such to prevent the panel from overturning with respect to the device itself; however, if the connection gets broken due to the amount of stresses applied thereto, it reaches the failure in suitable dissipative areas of the plate, it prevents the panel from being damaged and it allows the connection to be efficaciously and easily replaced (unlike conventional connections of the "hold-down" type, that cause the nail assembly to be broken, locally damaging the wooden panel).

In order to explain what mentioned above, and namely that said dissipative connecting device is tensile-stressed, reference is made to Fig.6 where it is possible to see how said dissipative connecting device 1, 10, 10', 10", connecting the panel L with the foundation C (not shown in the figure), withstands the overturning of the panel L with respect to said dissipative connecting device 1, 10, 10', 10". Horizontal forces (e.g. coming from the distribution of seismic actions in the building) shown in Fig.6 by F1, are divided into the reactions F2 and F3 at the base of the panel L, axially stressing (tensile and compression) the dissipative connecting device 1, 10, 10', 10". In Fig.6 the position of the panel not restrained by the action of the connecting devices is shown by a broken line, while the resistant panel in the starting position provided with the action of the dissipative connections placed at the base thereof is shown by a solid line.

As it is clear, by using a plurality of connecting devices 1, 10,10',10" to connect a plurality of construction elements L, C it will be possible to create buildings with any shape and size, also multi-storey ones, able to dissipate energy in a controlled manner between the construction elements L, C each building made in this manner being resistant to axial and bending stresses to which it is subjected, specifically due to possible seismic actions.

With reference to figures 5A and 5B, it is observed that the connecting device 10" shown herein, is connected to the wooden wall with the first and second holes arranged according to a U whose open side is faced towards the foundation beam, and with the long sides of the U arranged along the development direction of the plate. In practice, in the condition of horizontal foundations, the first holes are arranged horizontally to form a row overlying the two vertical columns of second holes.

The plate of the connecting device is fastened to a counter-plate fastened to the wooden wall of the building having threaded elements protruding perpendicularly to the wooden board and on which some holes provided in the plate of the connecting device are fitted.

In order to explain better the efficiency of the device described, figures 8A and 8B respectively show a front view of a dissipative connecting device arranged for being subjected to a tensile test and a view of the same device after having been subjected to a tensile test.

As it is clearly seen in figure 8A, the specimen of the dissipative connecting device 10 is a plate comprising a first portion 12 and a second portion 14.

The first portion 12 is above the second portion 14, and in the example shown here, it has a geometry with different sections, particularly sections increasing in the direction of the second portion 14.

In particular the greatest section of the first portion 12, therefore taken at the beginning of the second portion 14, is greater than the section of the second portion 14, that, in the embodiment shown here, on the contrary is constant for whole the length thereof and that has a substantially rectangular shape.

In particular the first portion 12 of the plate 10, at the greatest section, comprises the first holes 30 arranged in sequence and spaced apart such to create the first dissipative element 40 therebetween.

The first dissipative elements 40 are directed in the main development direction of the plate and absorb the axial stresses received by the plate.

The first portion 12 further comprises second holes 50, arranged also in sequence and spaced apart such to create the second dissipative elements 60, on the contrary directed perpendicularly to the main development direction of the plate and intended to absorb the bending stresses received by the plate 10.

Moreover the first holes 30 and second holes 50 and therefore the respective dissipative elements (40, 60) are arranged along a U-shaped, internally solid, curve faced with the short open side towards the beginning of the second portion 14.

Such arrangement of the holes and of the dissipative elements therefore define, inside the first portion 12, two lateral arms of the plate 10 (each one parallel to the long sides of the U-shaped curve) and an inner portion (comprised between the long sides and the short side of the U-shaped curve).

In particular it results that the second holes 50 and the respective dissipative elements 60 are arranged along the long sides of the U-shaped curve and therefore comprised between the two side arms of the plate 10. The first holes 30 and the respective dissipative elements 40, are on the contrary arranged along the short closed side of the U-shaped curve and they face the inner portion.

As also in the other examples described above with reference to figures 2 to 4, also in the device shown in figures 8A and 8B the inner portion of the U-shaped curve and the section of the second portion 14, have the same width, and the dissipative elements 40 are all comprised within such width, while the dissipative elements 60 fall outside such width.

During a tensile stress (with reference therefore to figure 8B) the dissipative connecting device 10 reacts by getting deformed, and it is possible to see how the failure phenomenon is localized at the dissipative elements (40, 60).

In detail it can be seen that, firstly a plasticization and a failure occur that involve the dissipative elements 40, that is those absorbing the axial stresses, and later the yielding of the device stops by involving the bending dissipative elements 60. Namely a progressive detachment of the second portion 14 from the first portion 12 of the plate 10 is observed, protecting the integrity of the elements connected thereto.

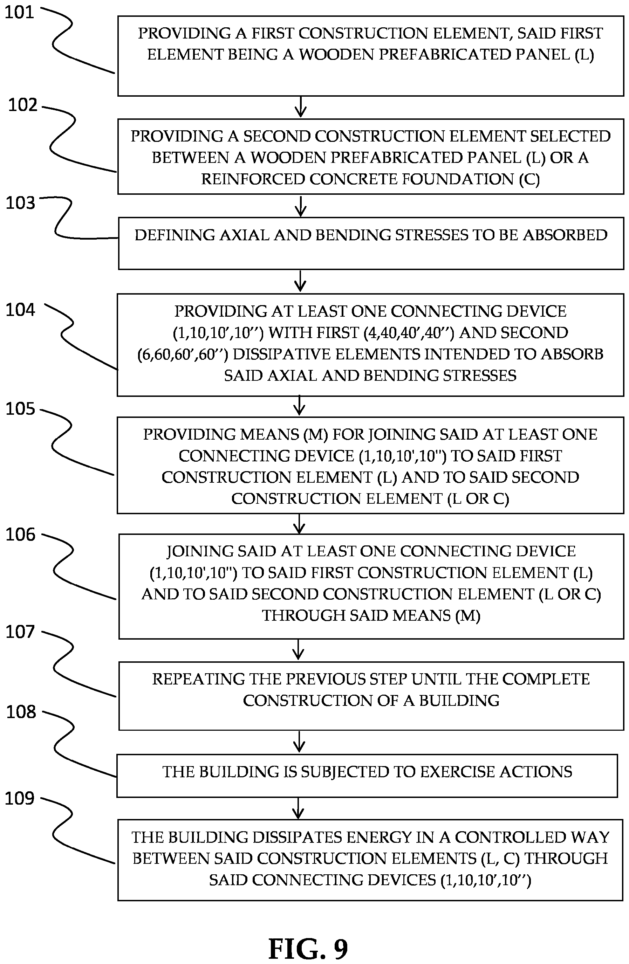

With reference to Fig.9 the method for the controlled dissipation of the energy between the construction elements L, C comprises the steps of:
a. providing a first construction element, said first element being a wooden prefabricated panel L (step 101),
b. providing a second construction element, said second element being selected between a wooden prefabricated panel L and a reinforced concrete foundation C (step 102),
c. defining axial stresses and bending stresses to be absorbed (step 103),
d. providing at least one connecting device 1,10,10',10" wherein said first holes 3,30,30',30" and said second holes 5,50,50',50" are dimensioned and mutually spaced such that said first dissipative elements 4, 40,40',40" and said second dissipative elements 6,60,60',60" work depending on said axial and bending stresses to be absorbed (step 104),
e. providing means M for joining said at least one connecting device 1,10,10',10" to said first construction element L and to said second construction element L or C (step 105),
f. joining said at least one connecting device 1,10,10',10" to said first construction element L and to said second construction element L or C through said means M (step 106),
g. repeating the previous step f. till completely constructing a building (step 107),
h. therefore the building is subjected to exercise actions (step 108) and
i. it dissipates energy in a controlled way between said construction elements L, C through said connecting device 1,10,10',10" (step 109).

Obviously, it results that generally it will be possible to construct a building with wooden walls by connecting them to foundation beams (e.g. made of reinforced concrete or other material) by connecting devices of the type described above with reference to the non limitative examples of figures 1-4. In case of a seismic event, the connecting device will dissipate seismic energy in a controlled way through the first and second dissipative elements described above.

For the dimensioning of the first holes 3,30,30',30" and second holes 5,50,50',50" and correspondingly of the first dissipative elements 4,40,40',40" and second ones 6,60,60',60" one can consider that said axial stresses (normal stress) vary from 0.01 kN to 10,000 kN and said bending stresses (shear stress) vary from 0.01 kN to 10,000 kN.

It is clear that the dimensioning of the dissipative connecting device according to the invention depends on the design requirements, on the material selected for the plate and on the characteristics of the construction elements to be joined; therefore the stresses mentioned above can vary according to design and operating reasonableness criteria.

As it results from what set forth above, the innovative technical solution described here has the following advantageous characteristics:
- it permits a dissipative ability greater than known solutions currently present in the reference technical field, which essentially provide the failure of the connectors joining the connected parts; the different failure mode allows also the connection element to be really replaced once it has developed its structural-dissipative function and once it has developed a permanent post-elastic deformation due to the high stresses;
- it is very easy to be manufactured, in relation to its geometry and to the manufacturing systems already available, and it can be made with a more compact rectangular shape, shown in the already mentioned Fig.1, or a "T"-shaped configuration shown in the already mentioned Figs. 2, 3 and 4 depending whether the manufacturing process or the amount of used material is desired to be minimized;
- it has a mechanical behavior dependent only from the characteristics of the dissipative elements, therefore connections having different shapes but with dissipative areas of the same shape, number and dimension, have an almost equal mechanical behavior;
- it is not constrained by the material used for making the dissipative connection, since the only constraint is that it has an elasto-plastic ductile behavior under tensile and compression conditions, suitable to the application context;
- absence of embedment damages for the connected parts in case of lack of failure of the areas of the connectors, since the only element of the connection on which the failure is concentrated is the connection element, that provides a resistance similar to, or if necessary, also higher than the conventional types, it is characterized by a designable failure mode and it is able to develop higher energy dissipation;
- it is highly versatile and it can be applied in several contexts in the field of new design buildings (prefabricated panel structures, infill walls of skeleton constructions) and of existing buildings (stiffening and recovery), that is in the several cases wherein an effective dissipative connection is required between elements subjected to cyclic actions in the connection plane;
- the choice of the constitutive material for the device can vary depending on the design and/or application context, the only constraint being the need of guaranteeing a suitable dissipative capacity by means of a ductile material, namely having an elasto-plastic behavior under tensile and compression conditions;
- it has easy application, removability and replaceability characteristics as essential elements in the field both of new buildings and in the renovation of existing ones or in post-seismic renovation;
- it competes, as regards performances, with the connections for wooden prefabricated elements currently available on the market;
- it is free from limitations as regards the legislative, environmental or geographical point of view.

From the description disclosed above it is clear how the dissipative connecting device, the building comprising a plurality of such devices and the method for the controlled dissipation of energy through such devices according to the present invention allow the provided objects to be achieved.

It is therefore clear, for a person skilled in the art, that is is possible to make changes and further variants of the different embodiments described with reference to the figures 1 to 9, without for this reason departing from the teaching of the present invention and from the scope of protection as defined in the annexed claims; particularly the device described herein is a basic element susceptible of potential alternative solutions and developments as regards the improvement of systems for increasing its replaceability between construction elements and the addition of parts for increasing some specific performances, for example the friction behavior of confinement plates.

### References

[1] Pacheco Torgal F., Jalali S. (2011) Eco-efficient Construction and Building Materials, Springer, 247 p.
[2] Pacheco Torgal F. (2014) Eco-efficient construction and building materials research under the EU Framework Programme Horizon 2020. Constr Build Mater 51:151-162.
[3] Kotsopoulos S. D., Farina C., Casalegno F., Briani A., Simeone P., Bindinelli R., & Pasetto G. (2012). A Building System for Connected Sustainability. World Conference on Timber Engineering - WCTE12, Auckland, New Zealand, 15-19 July 2012.
[4] De Luca A. (2013) Efficienza energetica e sostenibilità in edilizia: analisi LCA di un pannello X-LAM e valutazioni termoacustiche. Tesi di Laurea Magistrale in Scienza e Tecnologia dei Materiali, rel. G. Dotelli (Politecnico di Milano).
[5] Pasetto G., Peron F., Romagnoni P. (2013), Le prestazioni di isolamento termico ed acustico delle strutture in Xlam. Ingenio - Sistema integrato di informazione tecnica. http://www.ingenio-web.it/immagini/Articoli/PDF/fsiVuokAZn.pdf
[6] Ceccotti A. (2008), New Technologies for Construction of Medium-Rise Buildings in Seismic Regions: The XLAM Case, Structural Engineering International, 2/2008, 156-165.
[7] Piazza M., Tomasi R., Modena R. (2005), Strutture in legno: Materiale, calcolo e progetto secondo le normative europee, Hoepli, Milano.
[8] Fragiacomo, M., Dujic, B., & Sustersic, I. (2011), Elastic and ductile design of multi-storey crosslam massive wooden buildings under seismic actions. Engineering structures, 33(11), 3043-3053.
[9] Hristovski, V., Stojmanovska, M., & Dujic, B. (2012) Full-Scale Shaking Table Tests of XLam Panel Systems-Correlation With Cyclic Quasi-Static Tests. 15th World Conference in Earthquake Engineering - WCEE15, Lisbon, Portugal, 24-28 September.
[10] Ceccotti, A., Sandhaas, C., Okabe, M., Yasumura, M., Minowa, C. and Kawai, N. (2013), SOFIE project - 3D shaking table test on a seven-storey full-scale cross-laminated timber building. Earthquake Engng. Struct. Dyn., 42: 2003-2021. doi: 10.1002/eqe.2309
[11] Pozza, L. (2013). Ductility and behaviour factor of wood structural systems - Theoretical and experimental development of a high ductility wood-concrete shearwall system. Ph.D Thesis, University of Padova, Italy
[12] Rinaldin, G., Amadio, C., & Fragiacomo, M. (2013). A component approach for the hysteretic behaviour of connections in cross laminated wooden structures. Earthquake Engineering & Structural Dynamics, 42(13), 2023-2042.
[13] Tomasi, R., & Sartori, T. (2013). Mechanical behaviour of connections between wood framed shear walls and foundations under monotonic and cyclic load. Construction and Building Materials, 44, 682-690.
[14] Gavric I., Rinaldin G., Amadio C., Fragiacomo M., Ceccotti A. (2012), Experimental-numerical analyses of the seismic behaviour of cross-laminated wall systems, 15 WCEE, Lisbona 2012.
[15] Latour, M., & Rizzano, G. (2011). Experimental behavior and mechanical modeling of dissipative T-stub connections. Journal of Structural Engineering, 138(2), 170-182.
[16] Latour M., Rizzano G., Torello G. (2012). Seismic Performance of Cross-Laminated Timber Panel Buildings with Dissipative Connections. 15th World Conference in Earthquake Engineering - WCEE15, Lisbon, Portugal, 24-28 September.
[17] Yuen Loo W., Quenneville P., Chouw N. (2012). Design and numerical verification of a multi-storey timber shear wall with slup-friction connectors. World Conference on Timber Engineering - WCTE12, Auckland, New Zealand, 15-19 July 2012.
[18] Benavent-Climent, A. (2010). A brace-type seismic damper based on yielding the walls of hollow structural sections. Engineering Structures, 32(4), 1113-1122.
[19] Chan, R. W., & Albermani, F. (2008). Experimental study of steel slit damper for passive energy dissipation. Engineering Structures, 30(4), 1058-1066.
[20] Oh, S. H., Kim, Y. J., & Ryu, H. S. (2009). Seismic performance of steel structures with slit dampers. Engineering structures, 31(9), 1997-2008.
[21] Black, C. J., Makris, N., & Aiken, I. D. (2004). Component testing, seismic evaluation and characterization of buckling-restrained braces. Journal of Structural Engineering, 130(6), 880-894.
[22] Butterworth (2000) Ductile concentrically braced frames using slotted bolted joints. Journal of the Structural Engineering Society New Zealand, 13(1), 39-48.
[23] Mirtaheri, M., Zandi, A. P., Samadi, S. S., & Samani, H. R. (2011). Numerical and experimental study of hysteretic behavior of cylindrical friction dampers. Engineering Structures, 33(12), 3647-3656.

## Claims

1. A connecting device (1,10,10',10") between construction elements (L, C) for the controlled dissipation of energy comprising at least one plate comprising, in turn, at least a first portion (2, 12, 12',12"),
said at least first portion (2, 12, 12',12") comprises:
- a plurality of first holes (3,30,30',30") dimensioned and mutually spaced such to create a plurality of first dissipative elements (4,40,40',40") directed in the main development direction of the plate and intended to absorb axial stresses applied on said connecting device (1,10,10',10") and
- a plurality of second holes (5,50,50',50") dimensioned and mutually spaced such to create a plurality of second dissipative elements (6,60,60',60") directed perpendicularly to the main development direction of the plate and intended to absorb bending stresses applied on said connecting device (1,10,10',10"),
wherein the first and second holes have a substantially rectangular shape with rounded angles (α) and are arranged such that the second dissipative elements are arranged in sequence along the long sides of an internally solid U-shaped curve and wherein the first dissipative elements are arranged along the short side of the U-shaped curve.

2. A connecting device (1,10,10',10") according to claim 1, wherein said first holes (3,30,30',30") and said second holes (5,50,50',50") are dimensioned and distributed in the plate such that the first dissipative elements are separated from and have no point in common with the second dissipative elements.

3. A connecting device (1,10,10',10") according to claim 1 or 2, wherein said first holes (3,30,30',30") have dimensions ranging from 1 mm² to 160,000 mm² and are mutually spaced by 1 - 1,000 mm, and wherein said second holes (5,50,50',50") have dimensions ranging from 1 mm² to 160,000 mm² and are mutually spaced by 1 -1,000 mm.

4. A connecting device (10,10',10") according to any of the preceding claims, wherein the plate further comprises a second portion (14,14',14") having a section reduced with respect to said first portion (12,12',12"), such that said connecting device (10,10',10") has a substantially "T"-shaped configuration, wherein said first portion (12,12',12") and said second portion (14,14',14") further comprise, respectively, a plurality of first apertures (16',16") and a plurality of second apertures (18',18"), said first (16',16") and second (18',18") apertures being intended to receive means (M) for joining said connecting device (10,10',10") to said construction elements (L,C).

5. A connecting device (1,10,10',10") according to claim 4, wherein the first and second holes and the first apertures are arranged in the first plate portion and wherein the second plate portion comprises only said second apertures.

6. A connecting device (1,10,10',10") according to claim 4 or 5, wherein the portion internal to the U-shaped curve and the section of the second portion (14), are aligned and have the same width, and wherein the first dissipative elements (40) are all comprised within such width, while the second dissipative elements (60) fall outside such width.

7. A connecting device (10,10',10") according to any of the preceding claims, wherein said connecting device (1,10,10',10") is a plate made of a material with an elasto-plastic ductile behavior under tensile and compression conditions.

8. A connecting device (10,10',10") according to any of the preceding claims, suitable to be connected to construction elements (L,C) that are a wooden prefabricated panel (L) and a reinforced concrete foundation (C), respectively.

9. A building comprising a plurality of connecting devices (1,10,10',10") according to any of the preceding claims able to dissipate energy in a controlled way between construction elements (L, C) and, accordingly, being resistant to seismic actions.

10. A method for the controlled dissipation of energy between construction elements (L,C), comprising the following steps:
a. providing a first construction element, said first element being a wooden prefabricated panel (L) (step 101),
b. providing a second construction element, said second element being selected between a wooden prefabricated panel (L) and a reinforced concrete foundation (C) (step 102),
c. defining axial and bending stresses to be absorbed (step 103),
d. providing at least one connecting device (1,10,10',10") according to any of the claims 1 to 7, wherein said first holes (3,30,30',30") and said second holes (5,50,50',50") are dimensioned and mutually spaced such that said first dissipative elements (4, 40,40',40") and said second dissipative elements (6,60,60',60") work depending on said axial and bending stresses to be absorbed (step 104),
e. providing means (M) for joining said at least one connecting device (1,10,10',10") to said first construction element (L) and to said second construction element (L or C) (step 105),
f. joining said at least one connecting device (1,10,10',10") to said first construction element (L) and to said second construction element (L or C) through said means (M) (step 106),
g. repeating the previous step f. until the complete construction of a building (step 107),
h. the building is subjected to exercise actions (step 108) and
i. the building dissipates energy in a controlled way between said construction elements (L, C) through said connecting devices (1,10,10',10") (step 109).

11. A method according to claim 10, wherein the axial stresses, normal stress, and bending stresses, shear stress, on said first dissipative elements (4,40,40',40") and on said second dissipative elements (6,60,60',60") range from 0.01 kN to 10,000 kN.

12. A method for constructing a building according to claim 10 or 11, wherein a wooden wall of the building is connected to a foundation beam by a connecting device according to any of the claims 1 to 7.

13. A method according to claim 12, wherein the device is connected to the wooden wall with the first and second holes arranged according to a U whose open side is faced towards the foundation beam, and with the long sides of the U arranged along the development direction of the plate.

14. Method according to claim 13, wherein the plate of the connecting device is fastened to a counter-plate fastened to the wooden wall of the building.

## Patentansprüche

1. Verbindungsvorrichtung (1, 10, 10', 10") zwischen Bauelementen (L, C) zur kontrollierten Dissipation von Energie, mit wenigstens einer Platte, die wiederum aufweist:
wenigstens einen ersten Abschnitt (2, 12, 12', 12"),
wobei der wenigstens eine erste Abschnitt (2, 12, 12', 12") aufweist:
- mehrere erste Löcher (3, 30, 30', 30"), die so bemessen und in einem Abstand voneinander angeordnet sind, dass sie mehrere erste dissipative Elemente (4, 40, 40', 40") bilden, die in der Hauptentwicklungsrichtung der Platte ausgerichtet und dafür vorgesehen sind, auf die Verbindungsvorrichtung (1, 10, 10', 10") ausgeübte axiale Beanspruchungen aufzunehmen, und
- mehrere zweite Löcher (5, 50, 50', 50") die so bemessen und in einem Abstand voreinander angeordnet sind, dass sie mehrere zweite dissipative Elemente (6, 60, 60', 60") bilden, die senkrecht zu der Hauptentwicklungsrichtung der Platte ausgerichtet und dafür vorgesehen sind, auf die Verbindungsvorrichtung (1, 10, 10', 10") ausgeübte Biegebeanspruchungen auszunehmen,
wobei die ersten und zweiten Löcher eine im wesentlichen rechteckige Form mit gerundeten Winkeln (a) haben und so angeordnet sind, dass die zweiten dissipativen Elemente hintereinander entlang der Längsseiten einer internen massiven U-förmigen Kurve angeordnet sind, und wobei die ersten dissipativen Elemente entlang der kurzen Seite der U-förmigen Kurve angeordnet sind.

2. Verbindungsvorrichtung (1, 10, 10', 10") nach Anspruch 1, wobei die ersten Löcher (3, 30, 30', 30") und die zweiten Löcher (5, 50, 50', 50") so bemessen und auf der Platte verteilt sind, dass die ersten dissipativen Elemente von den zweiten dissipativen Elementen getrennt sind und keinen Punkt mit den zweiten dissipativen Elementen gemeinsam haben.

3. Verbindungsvorrichtung (1, 10, 10, 10") nach Anspruch 1 oder 2, wobei die ersten Löcher (3, 30, 30', 30") Abmessungen von 1 mm² bis 160.000 mm² haben und in einem Abstand von 1 - 1.000 mm angeordnet sind, und wobei die zweiten Löcher (5, 50, 50', 50") Abmessungen von 1 mm² bis 160.000 mm² haben und in einem Abstand von 1 - 1.000 mm angeordnet sind.

4. Verbindungsvorrichtung (10, 10', 10") nach einem der vorstehenden Ansprüche, wobei die Platte zusätzlich einen zweiten Abschnitt (14, 14', 14") aufweist, der einen Teil hat, der in Bezug auf den ersten Abschnitt (12, 12', 12") verschmälert ist, sodass die Verbindungsvorrichtung (10, 10', 10") im Wesentliche T-förmig ist, wobei der erste Abschnitt (12, 12', 12") und der zweite Abschnitt (14, 14', 14") zudem mehrere erste Öffnungen (16', 16") bzw. mehrere zweite Öffnungen (18', 18") aufweisen, wobei die ersten (16', 16") und die zweiten (18', 18") Öffnungen dazu vorgesehen sind, Mittel (M) zum Verbinden der Verbindungsvorrichtung (10, 10', 10") mit den Bauelementen (L, C) aufzunehmen.

5. Verbindungsvorrichtung (1, 10, 10', 10") nach Anspruch 4, wobei die ersten und zweiten Löcher und die ersten Öffnungen in dem ersten Plattenabschnitt angeordnet sind und wobei der zweite Plattenabschnitt nur die zweiten Öffnungen aufweist.

6. Verbindungsvorrichtung (1, 10, 10', 10") nach Anspruch 4 oder 5, wobei der Abschnitt, der in der U-förmigen Kurve liegt, und der Teil des zweiten Abschnitts (14) miteinander ausgerichtet sind und die selbe Breite haben, und wobei die ersten dissipativen Elemente (40) alle in dieser Breite liegen, während die zweiten dissipativen Elemente (60) außerhalb dieser Breite liegen.

7. Verbindungsvorrichtung (10, 10', 10") nach einem der vorstehenden Ansprüche, wobei die Verbindungsvorrichtung (1, 10, 10', 10") eine Platte aus einem Material mit einem elastisch-plastischen Verformungsverhalten unter Zug- und Spannungsbelastung ist.

8. Verbindungsvorrichtung (10, 10', 10") nach einem der vorstehenden Ansprüche, die dazu geeignet ist, mit Bauelementen (L, C) verbunden zu werden, die ein vorgefertigtes Weizens Panel (L) bzw. ein Stahlbetonfundament (C) sind.

9. Gebäude mit mehreren Verbindungselementen (1, 10, 10', 10") nach einem der vorstehenden Ansprüche, die Energie auf kontrollierte Weise zwischen Bauelementen (L, C) dissipieren können und dementsprechend Erdbebeneinwirkungen widerstehen können.

10. Verfahren zum kontrollierten Dissipieren von Energie zwischen Bauelementen (L, C) mit den folgenden Schritten:
a. Bereitstellen eines ersten Bauelements, wobei das erste Bauelement ein hölzernes vorgefertigtes Panel (L) ist (Schritt 102),
b. Bereitstellen eines zweiten Bauelements, wobei das zweite Element ein hölzernes vorgefertigtes Panel (L) oder ein Stahlbetonfundament (C) ist (Schritt 102),
c. Definieren von axialen Spannungen und von Biegespannungen, die absorbiert werden sollen (Schritt 103),
d. Bereitstellen wenigstens einer Verbindungsvorrichtung (1, 10, 10', 19") nach einem der Ansprüche 1 bis 7, wobei die ersten Löcher (3, 30, 30', 30") und die zweiten Löcher (5, 50, 50', 50") so bemessen und in einem Abstand voreinander angeordnet sind, dass die ersten dissipativen Elemente (4, 40, 40', 40") und die zweiten dissipativen Elemente (6, 60, 60', 60") in Abhängigkeit von den zu absorbierenden axialen Spannungen und Biegespannungen arbeiten (Schritt 104),
e. Bereitstellen von Mitteln (M) zum Verbinden der wenigstens einen Verbindungsvorrichtung (1, 10, 10', 10") mit dem ersten Bauelement (L) und dem zweiten Bauelement (L oder C) (Schritt 105),
f. Verbinden der wenigstens einen Verbindungsvorrichtung (1, 10, 10', 10") mit dem ersten Bauelement (L) und dem zweiten Bauelement (L oder C) mittels der Mittel (M) (Schritt 106),
g. Wiederholen des vorangegangenen Schritts f bis zur Fertigstellung eines Gebäudes (Schritt 107),
h. das Gebäude wird Schwingungsanregungen ausgesetzt (Schritt 108) und
i. das Gebäude dissipiert die Energie in kontrollierter Weise zwischen den Bauelementen (L, C) durch die Verbindungsvorrichtungen (1, 10, 10', 10") (Schritt 109).

11. Verfahren nach Anspruch 10, wobei die axialen Beanspruchungen, die normalen Beanspruchungen, die Biegebeanspruchungen und die Scherbeanspruchungen auf die ersten dissipativen Elemente (4, 40, 40', 40") und die zweiten dissipativen Elemente (6, 60, 60', 60") zwischen 0,01 kN bis 10.000 kN betragen.

12. Verfahren zum Herstellen eines Gebäudes nach Anspruch 10 oder 11, wobei eine hölzerne Wand des Gebäudes mit einem Fundamentbalken mittels einer Verbindungsvorrichtung nach einem der Ansprüche 1 bis 7 verbunden wird.

13. Verfahren nach Anspruch 12, wobei die Vorrichtung mit der hölzernen Wand mittels der ersten und zweiten Löcher verbunden ist, die gemäß einem U angeordnet sind, dessen offene Seite dem Fundamentbalken zugewandt ist, und wobei die langen Seiten des U in Richtung der Entwicklungsrichtung der Platte angeordnet sind.

14. Verfahren nach Anspruch 13, wobei die Platte der Verbindungsvorrichtung an einer Gegenplatte befestigt ist, die an der hölzernen Wand des Gebäudes befestigt ist.

## Revendications

1. Dispositif de raccordement (1, 10, 10', 10") entre des éléments de construction (L, C) pour la dissipation contrôlée d'énergie, comprenant au moins une plaque comprenant, à son tour, au moins une première partie (2, 12, 12', 12"),
ladite au moins une première partie (2, 12, 12', 12") comprend :
- une pluralité de premiers trous (3, 30, 30', 30") dimensionnés et mutuellement espacés pour créer une pluralité de premiers éléments de dissipation (4, 40, 40', 40") dirigés dans la direction de développement principale de la plaque et destinés à absorber des contraintes axiales appliquées sur ledit dispositif de raccordement (1, 10, 10', 10"), et
- une pluralité de seconds trous (5, 50, 50', 50") dimensionnés et mutuellement espacés pour créer une pluralité de seconds éléments de dissipation (6, 60, 60', 60") dirigés perpendiculairement à la direction de développement principale de la plaque et destinés à absorber des contraintes de flexion appliquées sur ledit dispositif de raccordement (1, 10, 10', 10"),
les premiers et seconds trous ayant une forme sensiblement rectangulaire avec des angles arrondis (α) et étant agencés de telle sorte que les seconds éléments de dissipation sont agencés en séquence le long des côtés longs d'une courbe en forme de U intérieurement plein, et les premiers éléments de dissipation étant agencés le long du côté court de la courbe en forme de U.

2. Dispositif de raccordement (1, 10, 10', 10") selon la revendication 1, dans lequel lesdits premiers trous (3, 30, 30', 30") et lesdits seconds trous (5, 50, 50', 50") sont dimensionnés et répartis dans la plaque de telle sorte que les premiers éléments de dissipation sont séparés des seconds éléments de dissipation et n'ont aucun point commun avec ceux-ci.

3. Dispositif de raccordement (1, 10, 10', 10") selon la revendication 1 ou 2, dans lequel lesdits premiers trous (3, 30, 30', 30") ont des dimensions situées dans la plage allant de 1 mm² à 160 000 mm² et sont mutuellement espacés de 1-1000 mm, et lesdits seconds trous (5, 50, 50', 50") ont des dimensions situées dans la plage allant de 1 mm² à 16000 mm² et sont mutuellement espacés de 1-1000 mm.

4. Dispositif de raccordement (1, 10, 10', 10") selon l'une quelconque des revendications précédentes, dans lequel la plaque comprend en outre une seconde partie (14, 14', 14") ayant une section réduite par rapport à ladite première partie (12, 12', 12"), de telle sorte que ledit dispositif de raccordement (10, 10', 10") a une configuration sensiblement en forme de « T », ladite première partie (12, 12', 12") et ladite seconde partie (14, 14', 14") comprenant en outre, respectivement, une pluralité de premières ouvertures (16', 16") et une pluralité de secondes ouvertures (18', 18"), lesdites premières (16', 16") et secondes (18', 18") ouvertures étant destinées à recevoir des moyens (M) pour assembler ledit dispositif de raccordement (10, 10', 10") auxdits éléments de construction (L, C).

5. Dispositif de raccordement (1, 10, 10', 10") selon la revendication 4, dans lequel les premiers et seconds trous et les premières ouvertures sont agencés dans la première partie de plaque et la seconde partie de plaque comprend uniquement lesdites secondes ouvertures.

6. Dispositif de raccordement (1, 10, 10', 10") selon la revendication 4 ou 5, dans lequel la partie interne à la courbe en forme de U et la section de la seconde partie (14) sont alignées et ont la même largeur, et les premiers éléments de dissipation (40) sont tous inclus dans ladite largeur tandis que les seconds éléments de dissipation (60) se situent à l'extérieur de ladite largeur.

7. Dispositif de raccordement (1, 10, 10', 10") selon l'une quelconque des revendications précédentes, dans lequel ledit dispositif de raccordement (1, 10, 10', 10") est une plaque faite d'un matériau ayant un comportement ductile élastoplastique dans des conditions de traction et de compression.

8. Dispositif de raccordement (1, 10, 10', 10") selon l'une quelconque des revendications précédentes, approprié pour être raccordé aux éléments de construction (L, C) qui sont un panneau préfabriqué en bois (L) et une fondation en béton armé (C), respectivement.

9. Bâtiment comprenant une pluralité de dispositifs de raccordement (1, 10, 10', 10") selon l'une quelconque des revendications précédentes, apte à dissiper de l'énergie d'une manière contrôlée entre des éléments de construction (L, C) et, en conséquence, étant résistant aux actions sismiques.

10. Procédé pour la dissipation contrôlée d'énergie entre des éléments de construction (L, C), comprenant les étapes suivantes :
a. disposer un premier élément de construction, ledit premier élément étant un panneau préfabriqué en bois (L) (étape 101),
b. disposer un second élément de construction, ledit second élément étant choisi entre un panneau préfabriqué en poids (L) et une fondation en béton armé (C) (étape 102),
c. définir des contraintes axiales et de flexion à absorber (étape 103),
d. disposer au moins un dispositif de raccordement (1, 10, 10', 10") selon l'une quelconque des revendications 1 à 7, lesdits premiers trous (3, 30, 30', 30") et lesdits seconds trous (5, 50, 50', 50") étant dimensionnés et mutuellement espacés de telle sorte que lesdits premiers éléments de dissipation (4, 40, 40', 40") et lesdits seconds éléments de dissipation (6, 60, 60', 60") fonctionnent selon lesdites contraintes axiales et de flexion à absorber (étape 104),
e. disposer des moyens (M) pour assembler ledit au moins un dispositif de raccordement (1, 10, 10', 10") audit premier élément de construction (L) et audit second élément de construction (L ou C) (étape 105),
f. assembler ledit au moins un dispositif de raccordement (1, 10, 10', 10") audit premier élément de construction (L) et audit second élément de construction (L ou C) par l'intermédiaire desdits moyens (M) (étape 106),
g. répéter l'étape f. précédente jusqu'à la construction complète d'un bâtiment (étape 107),
h. le bâtiment est soumis à des actions d'exercice (étape 108), et
i. le bâtiment dissipe de l'énergie d'une manière contrôlée entre lesdits éléments de construction (L, C) par l'intermédiaire desdits dispositifs de raccordement (1, 10, 10', 10") (étape 109).

11. Procédé selon la revendication 10, dans lequel les contraintes axiales, contrainte normale et contraintes de flexion, contrainte de cisaillement, sur lesdits premiers éléments de dissipation (4, 40, 40', 40") et lesdits seconds éléments de dissipation (6, 60, 60', 60") se situent dans la plage allant de 0,01 kN à 10000 kN.

12. Procédé de construction d'un bâtiment selon la revendication 10 ou 11, dans lequel un mur en bois du bâtiment est raccordé à une poutre de fondation par un dispositif de raccordement selon l'une quelconque des revendications 1 à 7.

13. Procédé selon la revendication 12, dans lequel le dispositif est raccordé au mur en bois avec les premiers et seconds trous agencés selon un U dont un côté ouvert est dirigé vers la poutre de fondation, et avec les côtés longs du U agencés le long de la direction de développement de la plaque.

14. Procédé selon la revendication 13, dans lequel la plaque du dispositif de raccordement est fixée à une contreplaque fixée au mur en bois du bâtiment.
